# EUROPÄISCHE PATENTSCHRIFT

(11) **EP 3 408 558 B1**
(45) Veröffentlichungstag und Bekanntmachung des Hinweises auf die Patenterteilung: **02.11.2022**
(21) Anmeldenummer: 17701841.3
(22) Anmeldetag: 23.01.2017
(51) Int. Cl.: F16F 13/10

(54) **HYDROLAGER MIT UNTERDRUCKVENTIL**
HYDRAULIC MOUNT WITH UNDERPRESSURE VALVE
SUPPORT HYDRAULIQUE AVEC VANNE DE DEPRESSION

(30) Priorität: 25.01.2016 DE 102016101203
(43) Veröffentlichungstag der Anmeldung: 05.12.2018
(73) Patentinhaber: Vibracoustic SE, 64293 Darmstadt (DE)
(72) Erfinder: BECKMANN, Wolfgang, 64289 Darmstadt (DE); YILDIRIM, Gamze, 68161 Mannheim (DE)
(74) Vertreter: Patentanwälte Olbricht Buchhold Keulertz
(86) Internationale Anmeldenummer: PCT/EP2017/051343
(87) Internationale Veröffentlichungsnummer: WO 2017/129531

(56) Entgegenhaltungen:
- EP-A1- 2 960 543
- DE-T5-112013 002 243
- DE-T5-112013 002 243
- JP-A- H0 226 336
- JP-A- 2013 228 004
- US-A- 4 850 578
- US-A1- 2012 228 813
- US-A1- 2012 292 838

## Beschreibung

Die vorliegende Erfindung betrifft ein Hydrolager, insbesondere zur Lagerung eines Kraftfahrzeugmotors an einer Fahrzeugkarosserie, umfassend eine Tragfeder, die einen Lagerkern abstützt, eine Arbeitskammer umschließt und sich an einem Außenring abstützt, eine Zwischenplatte und eine von der Arbeitskammer durch die Zwischenplatte getrennte und von einer Ausgleichsmembran begrenzte Ausgleichskammer, wobei die Ausgleichskammer und die Arbeitskammer mit einer Dämpfungsflüssigkeit gefüllt und über einen in der Zwischenplatte angeordneten Dämpfungskanal flüssigkeitsleitend miteinander verbunden sind, wobei die Zwischenplatte eine obere Düsenscheibe, eine untere Düsenscheibe und eine zwischen der oberen Düsenscheibe und der unteren Düsenscheibe angeordnete Membran aufweist, wobei die Membran einen Innenumfang, einen Außenumfang und wenigstens eine Ventilöffnung aufweist, und wobei die wenigstens eine Ventilöffnung vollständig zwischen dem Innenumfang und dem Außenumfang angeordnet ist.

Derartige hydraulisch dämpfende Lager werden insbesondere zur Abstützung eines Kraftfahrzeugmotors an einer Fahrzeugkarosserie verwendet, um einerseits die von Fahrbahnunebenheiten hervorgerufenen Schwingungen zu dämpfen und andererseits akustische Schwingungen zu isolieren. Die von Fahrbahnunebenheiten hervorgerufenen Schwingungen werden durch ein hydraulisches System gedämpft, wobei das hydraulische System durch die flüssigkeitsgedämpfte Arbeitskammer, die Ausgleichskammer und den die beiden Kammern miteinander verbindenden Dämpfungskanal gebildet wird. Die Funktionsweise des hydraulischen Systems kann wie folgt beschrieben werden: Die Arbeitskammer wird durch eine Bewegung der Tragfeder vergrößert oder verkleinert, wobei die in der Arbeitskammer befindliche Flüssigkeit über den Dämpfungskanal in die Ausgleichskammer gedrückt wird. Die im Dämpfungskanal schwingende Flüssigkeit bewirkt eine Dämpfung. Im Falle eines Unterdrucks in der Arbeitskammer gegenüber der Ausgleichskammer fließt die Flüssigkeit von der Ausgleichskammer in die Arbeitskammer zurück.

Aus der DE 11 2013 002 243 T5 ist eine vibrationsisolierende Vorrichtung mit einem Trennelement bekannt. Das Trennelement umfasst eine Membran, die in einem mittleren Abschnitt ein Überdruckventil aufweist. Der mittlere Abschnitt mit dem Überdruckventil ist dünner ausgestaltet als der Hauptkörper der Membran und weist in seiner Mitte ein Überdruckloch auf.

Aus US 2012/0228813 A1 ist ein Hydrolager bekannt, bei dem ein Arbeitsraum und ein Ausgleichsraum durch ein Trennelement getrennt sind. Das Trennelement umfasst einen Trennelementkörper, in den ein scheibenförmiger Deckel eingelegt ist. Zwischen Trennelementkörper und Deckel ist ein Ventilelement festgelegt. Das Ventilelement ist mit Ventilöffnungen versehen.

EP 2 960 543 A1 offenbart ein Hydrolager mit einer Tragfeder, die einen Lagerkern abstützt, eine Arbeitskammer umschließt und sich an einem Außenring abstützt, eine Zwischenplatte und eine von der Arbeitskammer durch die Zwischenplatte getrennte und von einem Rollbalg begrenzte Ausgleichskammer. Die Zwischenplatte weist eine obere Düsenscheibe, eine untere Düsenscheibe und eine zwischen der oberen Düsenscheibe und der unteren Düsenscheibe angeordnete Membran auf. Die Membran umfasst geschlitzte Ventilöffnungen. Dokument JP H02 26336 A offenbart das Präambel von dem Anspruch 1. Dokument US 4 850 578 A offenbart ein Hydrolager mit einer Membrane, die mit axialem Spiel aufgenommen ist.

Aufgabe der vorliegenden Erfindung ist es, Vorrichtungen der bekannten Art hinsichtlich der Entwicklung unerwünschter Geräusche bei großen Amplituden zu verbessern.

Diese Aufgabe wird durch ein Hydrolager nach Anspruch 1 gelöst. Vorteilhafte Ausgestaltungen der Erfindung sind Gegenstand der Unteransprüche.

Bei der erfindungsgemäßen Vorrichtung ist die Membran zwischen der oberen Düsenscheibe und der unteren Düsenscheibe mit einem axialen Spiel aufgenommen, um bei einem Unterdruck in der Arbeitskammer angehoben und gewölbt zu werden.

Erfindungsgemäss ist die Membran derart in die untere Düsenscheibe eingelegt werden, dass die wenigstens eine Ventilöffnung auf dem Material der unteren Düsenscheibe aufliegt. In dieser Konfiguration stellt die Zwischenplatte mit der Membran und den Düsenscheiben ein unidirektionales Ventil dar. Im Falle eines Überdrucks in der Arbeitskammer gegenüber der Ausgleichskammer wird die Membran auf die untere Düsenscheibe gedrückt. Dämpfungsflüssigkeit fließt dann nur durch den Dämpfungskanal aus der Arbeitskammer in die Ausgleichskammer.

Im Falle eines Unterdrucks in der Arbeitskammer gegenüber der Ausgleichskammer wirkt jedoch ein Sogeffekt auf die Membran, der diese zur oberen Düsenscheibe hin wölbt. Zwischen der Membran und der unteren Düsenscheibe bildet sich so ein Kanal. Die Dämpfungsflüssigkeit kann dann aus der Ausgleichskammer durch die Düsenanordnung der unteren Düsenscheibe, die Ventilöffnung der Membran und die Düsenanordnung der oberen Düsenscheibe in die Arbeitskammer zurückfließen. Dadurch wird vermieden, dass sich in der Arbeitskammer große Unterdrücke bilden. Durch die im Vergleich zu bekannten Zwischenplatten große Ventilöffnung lassen sich vergleichsweise sehr große Volumina von Dämpfungsflüssigkeit bei großen Amplituden führen. Dadurch wird das Auftreten von Kavitation und von damit verbundenen unerwünschten Geräuschen merklich verringert.

Vorteilhaft weist die untere Düsenscheibe einen Aufnahmebereich zum Aufnehmen der Membran auf, der eine Düsenanordnung und einen Materialabschnitt umfasst. Die Membran kann somit in dem Aufnahmebereich aufgenommen werden und ist an der unteren Düsenscheibe gegen radiales Verrutschen gesichert. Vorteilhaft weist der Materialabschnitt wenigstens einen Vorsprung auf, der dazu ausgebildet ist, in die Ventilöffnung der Membran einzugreifen. Die Membran ist damit auch gegen Verdrehen in dem Aufnahmebereich gesichert und in ihrer Position in dem Aufnahmebereich festgelegt.

Vorteilhaft weist die untere Düsenscheibe wenigstens einen Zentrierstift und die obere Düsenscheibe wenigstens eine Zentrieröffnung auf, wobei der wenigstens eine Zentrierstift dazu ausgebildet ist, in die wenigstens eine Zentrieröffnung eingeführt zu werden. Somit können die untere Düsenscheibe und die obere Düsenscheibe miteinander verbunden und gegen Verrutschen oder Verdrehen gesichert werden.

Vorteilhaft ist die Ventilöffnung als Langloch ausgebildet. Eine derartige Ausbildung ermöglicht weiter das Durchführen großer Volumina und verbessert somit das Ventilverhalten bei großen Amplituden.

Vorteilhaft ist die Längsachse der Ventilöffnung zur Radialrichtung versetzt angeordnet.

Die Membran ist zwischen der oberen Düsenscheibe und der unteren Düsenscheibe mit einem axialen Spiel festgelegt, wodurch sich die Membran einfacher anheben oder wölben kann.

Vorteilhaft ist die Membran aus einem elastischen Werkstoff hergestellt.

Vorteilhaft weist die Membran eine Oberflächenstruktur auf, wobei die Oberflächenstruktur vorzugsweise noppig ausgebildet ist.

Nachfolgend wird die Erfindung anhand eines Ausführungsbeispiels näher erläutert, das in den Zeichnungen schematisch dargestellt ist. Darin zeigt:
- Fig. 1: eine Querschnittsansicht eines Hydrolagers mit einer Zwischenplatte;
- Fig. 2: eine Draufsicht auf eine Membran einer Zwischenplatte;
- Fig. 3: eine Draufsicht auf eine untere Düsenscheibe;
- Fig. 4: eine Querschnittsansicht der unteren Düsenscheibe entlang der Schnittlinie aus Fig. 3; und
- Fig. 5: eine Draufsicht auf eine obere Düsenscheibe.

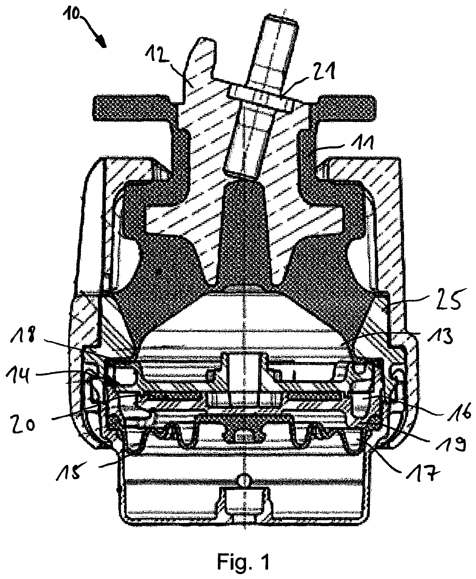

Fig. 1 zeigt ein Hydrolager 10 zur Lagerung eines nicht dargestellten Kraftfahrzeugmotors an einer nicht dargestellten Fahrzeugkarosserie. Das Hydrolager 10 weist eine Tragfeder 11 aus einem elastomeren Werkstoff zur Abstützung eines einvulkanisierten Lagerkerns 12 auf. An dem Lagerkern 12 ist der Motor befestigt (nicht dargestellt). In den Lagerkern 12 ist eine Verschraubung 21 eingelassen.

Die Tragfeder 11 stützt sich an einem Außenring 25 ab und begrenzt eine Arbeitskammer 13, die mittels einer Zwischenplatte 14 von einer Ausgleichskammer 17 getrennt ist. Die Ausgleichskammer 17 wird von einer Ausgleichsmembran 15 begrenzt, die auch als Rollbalg bezeichnet wird. Die Kammern 13 und 17 sind mit einer hydraulischen Flüssigkeit befüllt und über einen in der Zwischenplatte 14 angeordneten Dämpfungskanal 16 flüssigkeitsleitend miteinander verbunden.

Die Zwischenplatte 14 weist eine obere Düsenscheibe 18 und eine untere Düsenscheibe 19 auf. Die obere Düsenscheibe 18 und die untere Düsenscheibe 19 sind aus Kunststoff hergestellt. Zwischen der oberen Düsenscheibe 18 und der unteren Düsenscheibe 19 ist eine Membran 20 aufgenommen.

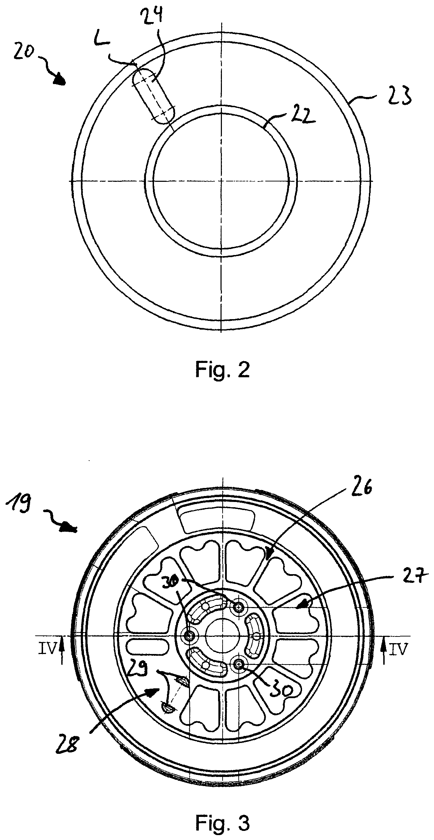

Fig. 2 zeigt eine Draufsicht auf eine Membran 20 eines erfindungsgemäßen Hydrolagers 10. Die Membran 20 ist im vorliegenden Beispiel ringförmig ausgestaltet und weist einen Innenumfang 22 und einen Außenumfang 23 auf. Weiter weist die Membran 20 eine Ventilöffnung 24 auf, die vollständig zwischen dem Innenumfang 22 und dem Außenumfang 23 angeordnet ist. Dadurch wird die Ventilöffnung vollständig durch den Werkstoff der Membran 20 begrenzt.

Im vorliegenden Beispiel ist die Ventilöffnung 24 langlochförmig ausgebildet. Die Längsachse L der Ventilöffnung 24 ist zur Radialrichtung der Membran 20 versetzt angeordnet, das heißt die Verlängerung der Längsachse L geht nicht durch den Mittelpunkt der Membran 20.

Die Membran 20 ist aus einem elastischen Werkstoff hergestellt und weist eine noppige Oberflächenstruktur auf (nicht dargestellt).

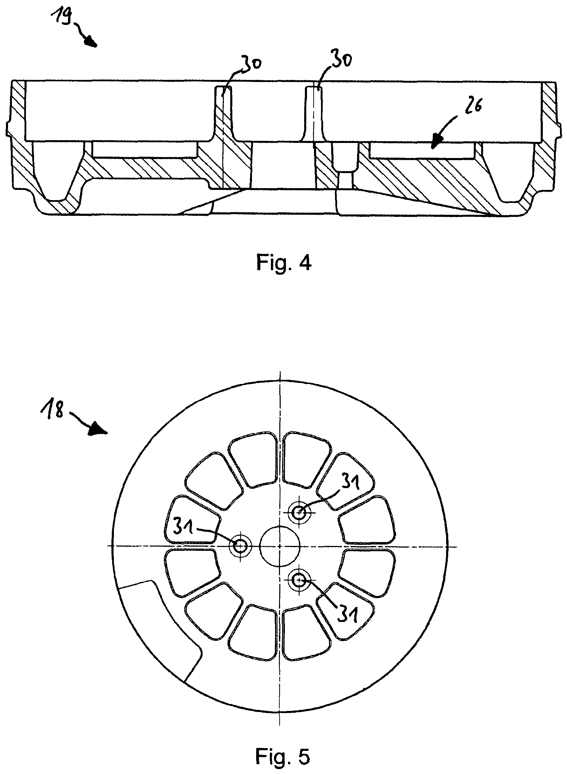

Fig. 3 zeigt eine Draufsicht auf eine untere Düsenscheibe 19. Fig. 4 zeigt eine Querschnittsansicht der unteren Düsenscheibe 19 entlang der Schnittlinie aus Fig. 3. Die untere Düsenscheibe 19 weist einen Aufnahmebereich 26 zum Aufnehmen der Membran 20 auf. Im vorliegenden Beispiel ist der Aufnahmebereich 26 als eine ringförmige Vertiefung in der unteren Düsenscheibe 19 ausgestaltet. Der Aufnahmebereich 26 ist somit derart gestaltet, dass die ringförmige Membran 20 aus Fig. 2 in diesem aufgenommen werden kann.

Der Aufnahmebereich 26 weist eine Düsenanordnung 27 und einen Materialabschnitt 28 auf. Die Düsenanordnung 27 ist durch mehrere Aussparungen gebildet, die sich aneinander entlang dem ringförmigen Aufnahmebereich 26 anschließen. Die Düsenanordnung 27 bildet im montierten Zustand einen Durchlass zur Ausgleichskammer 17.

An dem Materialabschnitt 28 weist der Aufnahmebereich 26 keine Aussparungen auf. Dieser ist nach unten hin durch das Material der unteren Düsenscheibe 19 verschlossen. Der Materialabschnitt 28 weist zwei Vorsprünge 29 auf. Die Vorsprünge 29 sind derart ausgebildet, dass sie in die Ventilöffnung 24 der Membran 20 eingreifen können. Demnach ist die Zwischenplatte 14 derart zu montieren, dass die Membran 20 derart in den Aufnahmebereich 26 der unteren Düsenscheibe 19 einzulegen ist, dass die Vorsprünge 29 exakt in die Ventilöffnung 24 eingreifen.

Ferner weist die untere Düsenscheibe 19 an ihrer zur Arbeitskammer 13 weisenden Seite drei Zentrierstifte 30 auf. Die Zentrierstifte 30 sind im vorliegenden Beispiel entlang einer um den Mittelpunkt der unteren Düsenscheibe 19 gezogenen Kreisbahn gleichmäßig angeordnet, also jeweils um 120° versetzt.

Fig. 5 zeigt eine erfindungsgemäße obere Düsenscheibe 18. Die obere Düsenscheibe 18 weist im vorliegenden Beispiel drei Zentrieröffnungen 31 auf, die derart ausgebildet und angeordnet sind, dass die drei Zentrierstifte 30 der unteren Düsenscheibe 19 in diese eingeführt werden können. Die untere Düsenscheibe 19 nimmt so die obere Düsenscheibe 18 auf. Die Membran 20 ist dann zwischen der unteren Düsenscheibe 19 und der oberen Düsenscheibe 18 aufgenommen. Die obere Düsenscheibe 18 weist ferner eine Düsenanordnung auf, die im montierten Zustand einen Durchlass zur Arbeitskammer 13 bildet.

Wenn die Zwischenplatte 14, bestehend aus unterer Düsenscheibe 19, oberer Düsenscheibe 18 und Membran 20, in dem Hydrolager 10 montiert ist, trennt diese die Arbeitskammer 13 von der Ausgleichskammer 17. Die Membran 20 ist dann derart in die untere Düsenscheibe 19 eingelegt, dass die Ventilöffnung 24 auf dem Material der unteren Düsenscheibe 19 aufliegt. In dieser Konfiguration stellt die Zwischenplatte 14 ein unidirektionales Ventil dar. Im Falle eines Überdrucks in der Arbeitskammer 13 gegenüber der Ausgleichskammer 17 wird die Membran 20 auf die untere Düsenscheibe 19 gedrückt. Dämpfungsflüssigkeit fließt dann durch den Dämpfungskanal 16 aus der Arbeitskammer 13 in die Ausgleichskammer 17.

Im Falle eines Unterdrucks in der Arbeitskammer 13 gegenüber der Ausgleichskammer 17 wirkt der Unterdruck durch die Düsenanordnung der oberen Düsenscheibe 18 auf die Membran 20, sodass diese angehoben und gewölbt wird. Zwischen der Membran 20 und der unteren Düsenscheibe 19 bildet sich so der Kanal für den Rückfluss der Dämpfungsflüssigkeit. Die Dämpfungsflüssigkeit kann dann aus der Ausgleichskammer 17 durch die Düsenanordnung der unteren Düsenscheibe 19, die Ventilöffnung 24 der Membran 20 und die Düsenanordnung der oberen Düsenscheibe 18 in die Arbeitskammer 13 zurückfließen.

### Bezugszeichenliste

- 10: Hydrolager
- 11: Tragfeder
- 12: Lagerkern
- 13: Arbeitskammer
- 14: Zwischenplatte
- 15: Ausgleichsmembran
- 16: Dämpfungskanal
- 17: Ausgleichskammer
- 18: obere Düsenscheibe
- 19: untere Düsenscheibe
- 20: Membran
- 21: Verschraubung
- 22: Innenumfang
- 23: Außenumfang
- 24: Ventilöffnung
- 25: Außenring
- 26: Aufnahmebereich
- 27: Düsenanordnung
- 28: Materialabschnitt
- 29: Vorsprung
- 30: Zentrierstift
- 31: Zentrieröffnung

- L: Längsachse

## Patentansprüche

1. Hydrolager (10), insbesondere zur Lagerung eines Kraftfahrzeugmotors an einer Fahrzeugkarosserie, umfassend eine Tragfeder (11), die einen Lagerkern (12) abstützt, eine Arbeitskammer (13) umschließt und sich an einem Außenring (25) abstützt, eine Zwischenplatte (14) und eine von der Arbeitskammer (13) durch die Zwischenplatte (14) getrennte und von einer Ausgleichsmembran (15) begrenzte Ausgleichskammer (17), wobei die Ausgleichskammer (17) und die Arbeitskammer (13) mit einer Dämpfungsflüssigkeit gefüllt und über einen in der Zwischenplatte (14) angeordneten Dämpfungskanal (16) flüssigkeitsleitend miteinander verbunden sind, wobei die Zwischenplatte (14) eine obere Düsenscheibe (18), eine untere Düsenscheibe (19) und eine zwischen der oberen Düsenscheibe (18) und der unteren Düsenscheibe (19) angeordnete Membran (20) aufweist, wobei die Membran (20) einen Innenumfang (22), einen Außenumfang (23) und wenigstens eine Ventilöffnung (24) aufweist, und wobei die wenigstens eine Ventilöffnung (24) vollständig zwischen dem Innenumfang (22) und dem Außenumfang (23) angeordnet ist, **dadurch gekennzeichnet, dass** die Membran (20) zwischen der oberen Düsenscheibe (18) und der unteren Düsenscheibe (19) mit einem axialen Spiel aufgenommen ist, um bei einem Unterdruck in der Arbeitskammer (13) angehoben und gewölbt zu werden, wobei die Membran (20) derart in die untere Düsenscheibe (19) eingelegt ist, dass die wenigstens eine Ventilöffnung (24) auf dem Material der unteren Düsenscheibe (19) aufliegt.

2. Hydrolager (10) nach Anspruch 1, **dadurch gekennzeichnet, dass** die untere Düsenscheibe (19) einen Aufnahmebereich (26) zum Aufnehmen der Membran (20) aufweist, der eine Düsenanordnung (27) und einen Materialabschnitt (28) umfasst.

3. Hydrolager (10) nach Anspruch 2, **dadurch gekennzeichnet, dass** der Materialabschnitt (28) wenigstens einen Vorsprung (29) aufweist, der dazu ausgebildet ist, in die Ventilöffnung (24) der Membran (20) einzugreifen.

4. Hydrolager (10) nach einem der vorstehenden Ansprüche, **dadurch gekennzeichnet, dass** die untere Düsenscheibe (19) wenigstens einen Zentrierstift (30) und die obere Düsenscheibe (18) wenigstens eine Zentrieröffnung (31) aufweist, wobei der wenigstens eine Zentrierstift (30) dazu ausgebildet ist, in die wenigstens eine Zentrieröffnung (31) eingeführt zu werden.

5. Hydrolager (10) nach einem der vorstehenden Ansprüche, **dadurch gekennzeichnet, dass** die Ventilöffnung (24) als Langloch ausgebildet ist.

6. Hydrolager (10) nach einem der vorstehenden Ansprüche, **dadurch gekennzeichnet, dass** die Längsachse (L) der Ventilöffnung (24) zur Radialrichtung versetzt angeordnet ist.

7. Hydrolager (10) nach einem der vorstehenden Ansprüche, **dadurch gekennzeichnet, dass** die Membran (20) aus einem elastischen Werkstoff hergestellt ist.

8. Hydrolager (10) nach einem der vorstehenden Ansprüche, **dadurch gekennzeichnet, dass** die Membran (20) eine Oberflächenstruktur aufweist, wobei die Oberflächenstruktur vorzugsweise noppig ausgebildet ist.

## Claims

1. A hydromount (10), in particular for mounting a motor vehicle engine on a vehicle body, comprising a suspension spring (11) which supports a bearing core (12), encloses a working chamber (13) and is supported on an outer ring (25), an intermediate plate (14) and a compensation chamber (17) which is separated from the working chamber (13) by the intermediate plate (14) and is bounded by a compensation diaphragm (15), the compensation chamber (17) and the working chamber (13) being filled with a damping liquid and being connected to one another in a liquid-conducting manner via a damping channel (16) arranged in the intermediate plate (14), the intermediate plate (14) having an upper nozzle disc (18), a lower nozzle disc (19) and a diaphragm (20) arranged between the upper nozzle disc (18) and the lower nozzle disc (19), the diaphragm (20) having an inner circumference (22), an outer circumference (23) and at least one valve opening (24), and the at least one valve opening (24) being completely arranged between the inner circumference (22) and the outer circumference (23), **characterized in that** the diaphragm (20) is received between the upper nozzle disc (18) and the lower nozzle disc (19) with an axial clearance to be lifted and arched in case of a negative pressure in the working chamber (13), wherein the diaphragm (20) is inserted into the lower nozzle disc (19) such that the at least one valve opening (24) rests on the material of the lower nozzle disc (19).

2. Hydromount (10) according to claim 1, **characterized in that** the lower nozzle disc (19) has a receiving area (26) for receiving the diaphragm (20), which comprises a nozzle arrangement (27) and a material section (28).

3. Hydromount (10) according to claim 2, **characterized in that** the material section (28) has at least one projection (29) which is configured to engage in the valve opening (24) of the diaphragm (20).

4. Hydromount (10) according to one of the preceding claims, **characterized in that** the lower nozzle disk (19) has at least one centering pin (30) and the upper nozzle disk (18) has at least one centering opening (31), the at least one centering pin (30) being configured to be inserted into the at least one centering opening (31).

5. Hydromount (10) according to one of the preceding claims, **characterized in that** the valve opening (24) is designed as an elongated hole.

6. Hydromount (10) according to one of the preceding claims, **characterized in that** the longitudinal axis (L) of the valve opening (24) is arranged offset to the radial direction.

7. Hydromount (10) according to one of the preceding claims, **characterized in that** the diaphragm (20) is made of an elastic material.

8. Hydromount (10) according to one of the preceding claims, **characterized in that** the diaphragm (20) has a surface structure, the surface structure preferably being nubby.

## Revendications

1. Palier hydraulique (10), en particulier pour le montage d'un moteur de véhicule automobile sur une carrosserie de véhicule, comprenant un ressort porteur (11) qui soutient un noyau de support (12), entoure une chambre de travail (13) et s'appuie sur une bague extérieure (25), une plaque intermédiaire (14) et une chambre de compensation (17) séparée de la chambre de travail (13) par la plaque intermédiaire (14) et délimitée par une membrane de compensation (15), la chambre de compensation (17) et la chambre de travail (13) étant remplies d'un liquide d'amortissement et reliées l'une à l'autre de manière à conduire le liquide par un canal d'amortissement (16) disposé dans la plaque intermédiaire (14), la plaque intermédiaire (14) comportant un disque de buse supérieur (18), un disque de buse inférieur (19) et une membrane (20) disposée entre le disque de buse supérieur (18) et le disque de buse inférieur (19), la membrane (20) présentant une périphérie intérieure (22), une périphérie extérieure (23) et au moins une ouverture de soupape (24), et la au moins une ouverture de soupape (24) étant disposée entièrement entre la périphérie intérieure (22) et la périphérie extérieure (23), **caractérisé en ce que** la membrane (20) est logée entre le disque de buse supérieur (18) et le disque de buse inférieur (19) avec un jeu axial pour être soulevée et bombée en cas de dépression dans la chambre de travail (13), la membrane (20) étant insérée dans le disque de buse inférieur (19) de telle sorte que l'au moins une ouverture de soupape (24) repose sur le matériau du disque de buse inférieur (19).

2. Palier hydraulique (10) selon la revendication 1, **caractérisé en ce que** le disque de buse inférieur (19) présente une zone de réception (26) pour recevoir la membrane (20), qui comprend un agencement de buses (27) et une section de matériau (28).

3. Palier hydraulique (10) selon la revendication 2, **caractérisé en ce que** la section de matériau (28) présente au moins une saillie (29) qui est conçue pour s'engager dans l'ouverture de soupape (24) de la membrane (20).

4. Palier hydraulique (10) selon l'une quelconque des revendications précédentes, **caractérisé en ce que** le disque de buse inférieur (19) comprend au moins une broche de centrage (30) et le disque de buse supérieur (18) comprend au moins un orifice de centrage (31), ladite au moins une broche de centrage (30) étant adaptée pour être insérée dans ledit au moins un orifice de centrage (31).

5. Palier hydraulique (10) selon l'une des revendications précédentes, **caractérisé en ce que** l'ouverture de soupape (24) est conçue comme un trou oblong.

6. Palier hydraulique (10) selon l'une des revendications précédentes, **caractérisé en ce que** l'axe longitudinal (L) de l'ouverture de soupape (24) est décalé par rapport à la direction radiale.

7. Palier hydraulique (10) selon l'une des revendications précédentes, **caractérisé en ce que** la membrane (20) est fabriquée en un matériau élastique.

8. Palier hydraulique (10) selon l'une des revendications précédentes, **caractérisé en ce que** la membrane (20) présente une structure de surface, la structure de surface étant de préférence réalisée sous forme de noppes.
